# EUROPEAN PATENT SPECIFICATION

(11) **EP 2 586 968 B1**
(45) Date of publication and mention of the grant of the patent: **10.07.2019**
(21) Application number: 12190258.9
(22) Date of filing: 26.10.2012
(51) Int. Cl.: F01D 5/08, F01D 5/30, F01D 11/00, F01D 25/12

(54) **Secondary flow arrangement for slotted rotor**
Sekundärflussanordnung für einen geschlitzten Rotor
Agencement d'écoulement secondaire pour rotor rainuré

(30) Priority: 28.10.2011 US 201113283689; 28.10.2011 US 201113283733; 28.10.2011 US 201113283710; 30.04.2012 US 201213459474
(43) Date of publication of application: 01.05.2013
(73) Proprietor: United Technologies Corporation, Farmington, CT 06032 (US)
(72) Inventor: Suciu, Gabriel L., Glastonbury, CT 06033 (US); Dye, Christopher M., San Diego, CA 92117 (US); Ackermann, William K., East Hartford, CT 06118-1905 (US); Muron, Stephen P., Columbia, CT 06237 (US); Alvanos, Ioannis, West Springfield, MA 01089 (US); Merry, Brian D., Andover, CT 06232 (US); Salve, Arthur M., Tolland, CT 06084 (US); Norris, James W., Lebanon, CT 06249 (US)
(74) Representative: Dehns

(56) References cited:
- EP-A1- 0 250 323
- EP-A1- 2 009 234
- DE-A1- 10 340 823
- DE-A1-102010 063 071
- FR-A1- 2 930 589
- JP-U- S5 846 801
- US-A- 2 656 147
- US-A- 3 709 631
- US-A- 4 795 307
- US-A1- 2010 303 606
- US-B2- 7 252 477

## Description

### BACKGROUND

The present disclosure relates to a gas turbine engine, and more particularly to a rotor system therefor.

Gas turbine rotor systems include successive rows of blades, which extend from respective rotor disks that are arranged in an axially stacked configuration. The rotor stack may be assembled through a multitude of systems such as fasteners, fusion, tie-shafts and combinations thereof.

Gas turbine rotor systems operate in an environment in which significant pressure and temperature differentials exist across component boundaries which primarily separate a core gas flow path and a secondary cooling flow path. For highpressure, high-temperature applications, the components experience thermo-mechanical fatigue (TMF) across these boundaries. Although resistant to the effects of TMF, the components may be of a heavier-than-optimal weight for desired performance requirements.

Further, secondary flow systems are typically designed to provide cooling to turbine components, bearing compartments, and other high-temperature subsystems. These flow networks are subject to losses due to the length of flow passages, number of restrictions, and scarcity of airflow sources, which can reduce engine operating efficiency.

DE 10 2010 063 071 A1, which is prior art under Article 54(3) EPC, discloses a cooling device for a jet engine.

US 2,656,147 discloses a rotor for a gas turbine engine as set forth in the preamble of claim 1.

### SUMMARY

According to a first aspect of the invention, there is provided a rotor for a gas turbine engine as recited in claim 1.

Features of embodiments of the invention are set forth in the dependent claims.

Various features will become apparent to those skilled in the art from the following detailed description of the disclosed non-limiting embodiment. The drawings that accompany the detailed description can be briefly described as follows:
Figure 1 is a schematic cross-sectional view of a gas turbine engine;
Figure 2 is an exploded view of the gas turbine engine separated into primary build modules;
Figure 3 is an enlarged schematic cross-sectional view of a high pressure compressor section of the gas turbine engine;
Figure 4 is a perspective view of a rotor of the high pressure compressor section;
Figure 5A is an expanded partial sectional perspective view of the rotor of Figure 4;
Figure 5B is an expanded partial section perspective view of another rotor configuration;
Figure 6A is an expanded partial sectional perspective view of a portion of the high pressure compressor section;
Figure 6B is an expanded partial sectional perspective view of another configuration of a portion of the high pressure compressor section;
Figure 7 is a top partial sectional perspective view of a portion of the high pressure compressor section with an outer directed inlet;
Figure 8 is a top partial sectional perspective view of a portion of the high pressure compressor section with an inner directed inlet;
Figure 9 is an expanded partial sectional view of a portion of the high pressure compressor section;
Figure 10 is an expanded partial sectional perspective view of a portion of the high pressure compressor section illustrating a rotor stack load path;
Figure 11 is a RELATED ART expanded partial sectional perspective view of a portion of the high pressure compressor section illustrating a more tortuous rotor stack load path;
Figure 12A is an expanded partial sectional perspective view of a portion of the high pressure compressor section illustrating a wire seal structure;
Figure 12B is an expanded partial sectional perspective view of another configuration of a portion of the high pressure compressor section illustrating a wire seal structure;
Figure 13 is an expanded schematic view of the wire seal structure;
Figure 14 is an expanded partial sectional perspective view of a high pressure turbine section;
Figure 15 is an expanded exploded view of the high pressure turbine section; and
Figure 16 is an expanded partial sectional perspective view of the rotor of Figure 15.

### DETAILED DESCRIPTION

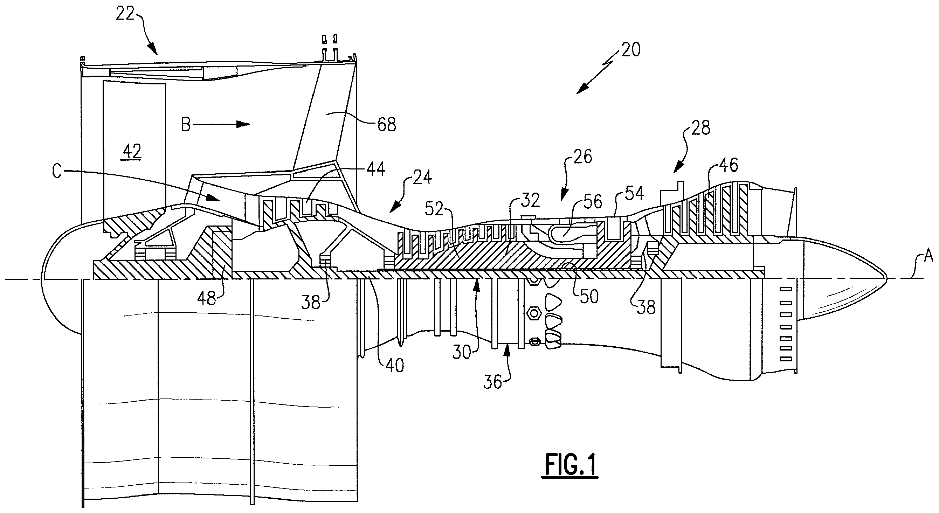

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath B while the compressor section 24 drives air along a core flowpath C for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines, such as three-spool architectures.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that interconnects a fan 42, a low pressure compressor 44 and a low pressure turbine 46. The inner shaft 40 may be connected to the fan 42 directly or through a geared architecture 48 to drive the fan 42 at a lower speed than the low speed spool 30 which in one disclosed non-limiting embodiment includes a gear reduction ratio of, for example, at least 2.3:1. The high speed spool 32 includes an outer shaft 50 that interconnects a high pressure compressor (HPC) 52 and high pressure turbine (HPT) 54. A combustor 56 is arranged between the high pressure compressor 52 and the high pressure turbine 54. The inner shaft 40 and the outer shaft 50 are concentric and rotate about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 54, 46 rotationally drive the respective low speed spool 30 and high speed spool 32 in response to the expansion.

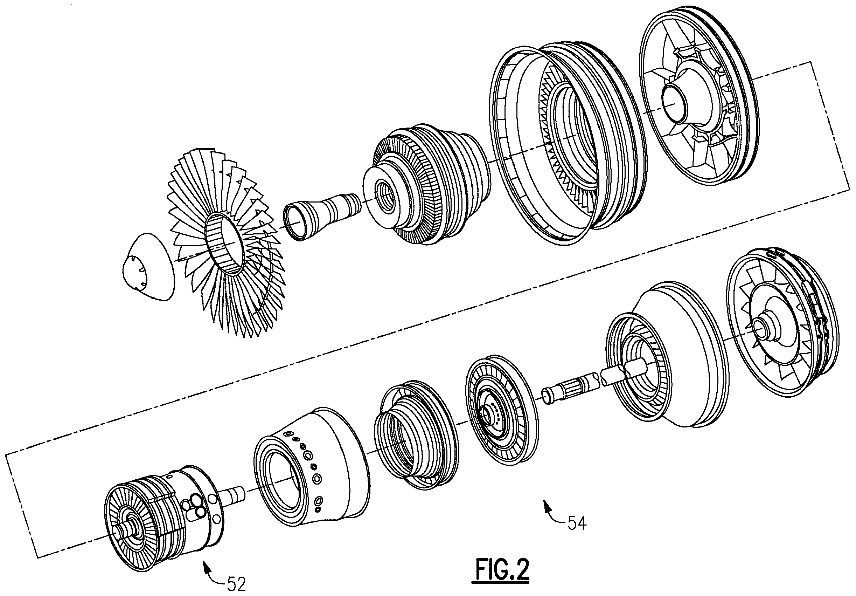

The gas turbine engine 20 is typically assembled in build groups or modules (Figure 2). In the illustrated embodiment, the high pressure compressor 52 includes eight stages and the high pressure turbine 54 includes two stages in a stacked arrangement. It should be appreciated, however, that any number of stages will benefit hereform as well as other engine sections such as the low pressure compressor 44 and the low pressure turbine 46. Further, other gas turbine architectures such as a three-spool architecture with an intermediate spool will also benefit herefrom as well.

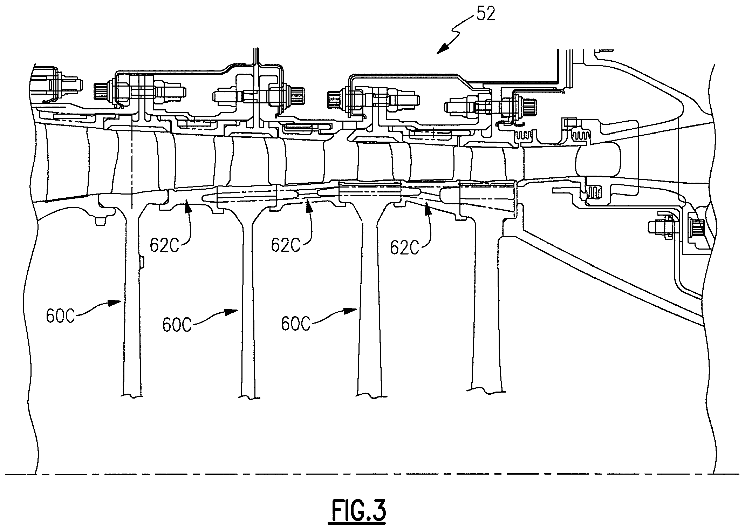

With reference to Figure 3, the high pressure compressor (HPC) 52 is assembled from a plurality of successive HPC rotors 60C which alternate with HPC spacers 62C arranged in a stacked configuration. The rotor stack may be assembled in a compressed tie-shaft configuration, in which a central shaft (not shown) is assembled concentrically within the rotor stack and secured with a nut (not shown), to generate a preload that compresses and retains the HPC rotors 60C with the HPC spacers 62C together as a spool. Friction at the interfaces between the HPC rotor 60C and the HPC spacers 62C is solely responsible to prevent rotation between adjacent rotor hardware.

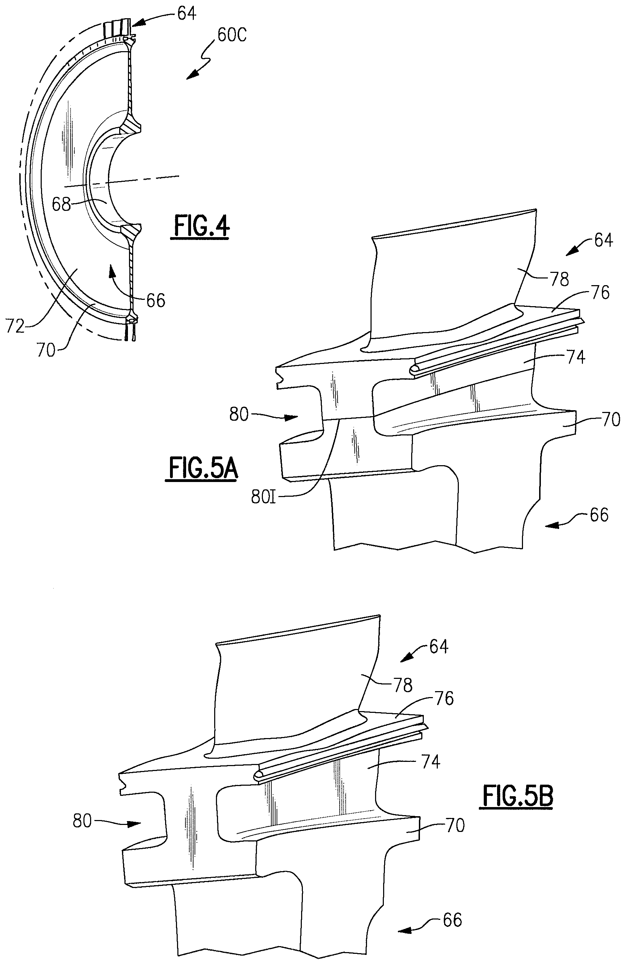

With reference to Figure 4, each HPC rotor 60C generally includes a plurality of blades 64 circumferentially disposed around a rotor disk 66. The rotor disk 66 generally includes a hub 68, a rim 70, and a web 72 which extends therebetween. Each blade 64 generally includes an attachment section 74, a platform section 76 and an airfoil section 78 (Figure 5A).

The HPC rotor 60C may be a hybrid dual alloy integrally bladed rotor (IBR) in which the blades 64 are manufactured of one type of material and the rotor disk 66 is manufactured of different material. Bi-metal construction provides material capability to separately address different temperature requirements. For example, the blades 64 are manufactured of a single crystal nickel alloy that are transient liquid phase bonded with the rotor disk 66 which is manufactured of a different material such as an extruded billet nickel alloy. Alternatively, or in addition to the different materials, the blades 64 may be subject to a first type of heat treat and the rotor disk 66 to a different heat treat. That is, the Bi-metal construction as defined herein includes different chemical compositions as well as different treatments of the same chemical compositions such as that provided by differential heat treatment.

With reference to Figure 5A, a spoke 80 is defined between the rim 70 and the attachment section 74. The spoke 80 is a circumferentially reduced section defined by interruptions which produce axial or semi-axial slots which flank each spoke 80. The spokes 80 may be machined, cut with a wire EDM or other processes to provide the desired shape. An interface 801 that defines the transient liquid phase bond and or heat treat transition between the blades 64 and the rotor disk 66 are defined within the spoke 80. That is, the spoke 80 contains the interface 801. Heat treat transition as defined herein is the transition between differential heat treatments.

The spoke 80 provides a reduced area subject to the thermo-mechanical fatigue (TMF) across the relatively high temperature gradient between the blades 64 which are within the relatively hot core gas path and the rotor disk 66 which is separated therefrom and is typically cooled with a secondary cooling airflow.

In another example configuration shown in Figure 5B, the blades 64 and rotor disk 66 of the HPC rotor 60C are formed from a common material. As such, the rotor disk 66, platform section 76, and airfoil portion 78 are integrally formed together as a single-piece component.

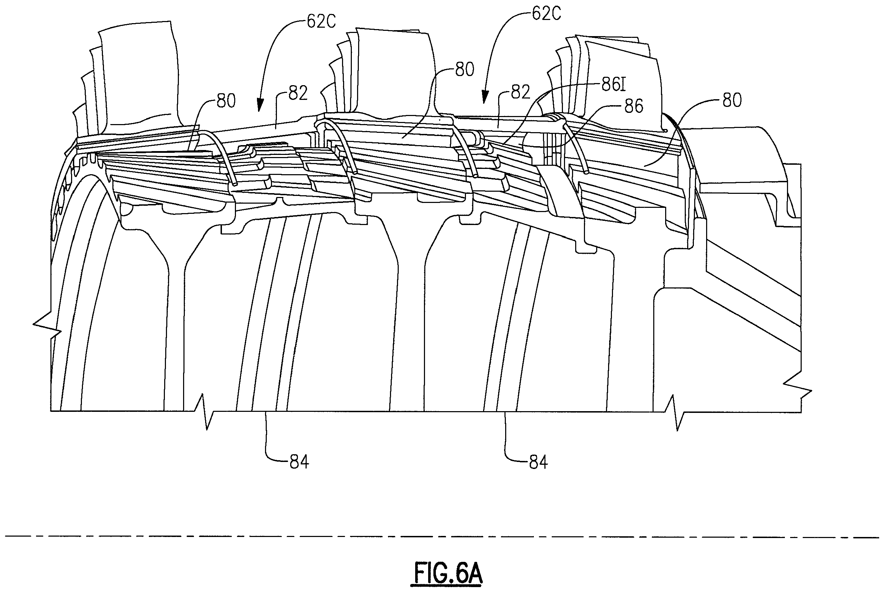

With reference to Figure 6A, the HPC spacers 62C provide a similar architecture to the HPC rotor 60C in which a plurality of core gas path seals 82 are bonded or otherwise separated from a rotor ring 84 at an interface 861 defined along a spoke 86. In one example, the seals 82 may be manufactured of the same material as the blades 64 and the rotor ring 84 may be manufactured of the same material as the rotor disk 66. That is, the HPC spacers 62C may be manufactured of a hybrid dual alloy which is a transient liquid phase bonded at the spoke 86. Alternatively, the HPC spacers 62C may be manufactured of a single material but subjected to the differential heat treat which transitions within the spoke 86. In another disclosed non-limiting embodiment, a relatively low-temperature configuration will benefit from usage of a single material such that the spokes 86 facilitate a weight reduction. In another disclosed non-limiting embodiment, low-temperature bi-metal designs may further benefit from dissimilar materials for weight reduction where, for example, low density materials may be utilized where load carrying capability is less critical.

The rotor geometry provided by the spokes 80, 86 reduces the transmission of core gas path temperature via conduction to the rotor disk 66 and the seal ring 84. The spokes 80, 86 enable an IBR rotor to withstand increased T3 levels with currently available materials. Rim cooling may also be reduced from conventional allocations. In addition, the overall configuration provides weight reduction at similar stress levels to current configurations.

The spokes 80, 86 in the disclosed non-limiting embodiment are oriented at a slash angle with respect to the engine axis A to minimize windage and the associated thermal effects. That is, the spokes are non-parallel to the engine axis A.

As discussed above, Figure 6A discloses a configuration where the HPC spacers 62C are formed of one material while the rotor disk 66 is formed of a different material in a manner similar to that with the blades 64 and rotor disk 66 as discussed above in reference to Figure 5A. The spokes 86 provide a reduced area subject to the thermo-mechanical fatigue (TMF) across the relatively high temperature gradient between the spacers 62C which are within the relatively hot core gas path and the rotor disk 66 which is separated therefrom and is typically cooled with a secondary cooling airflow.

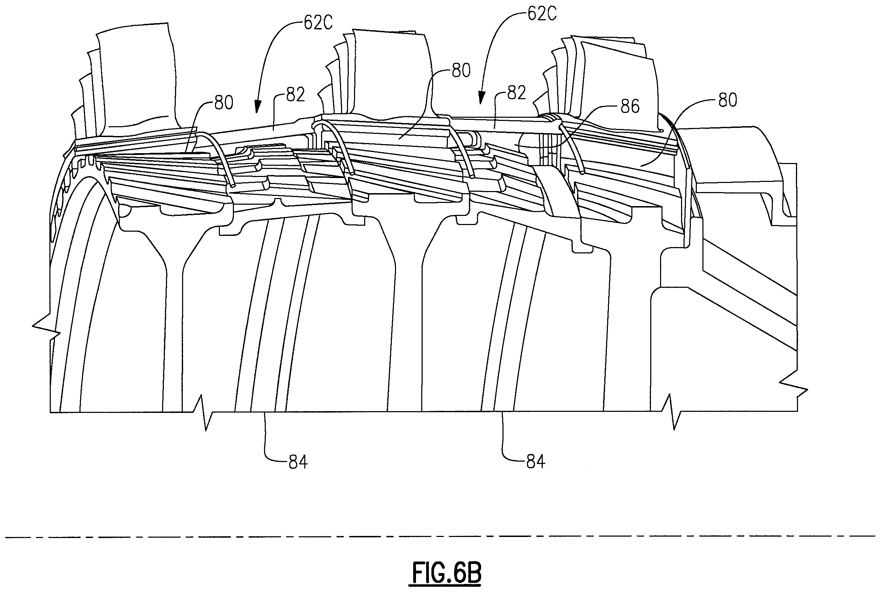

In another example configuration shown in Figure 6B, the spacers 62C and rotor ring 84 of the HPC rotor 60C are formed from a common material. As such, the rotor ring 84 and spacer 62C are integrally formed together as a single-piece component.

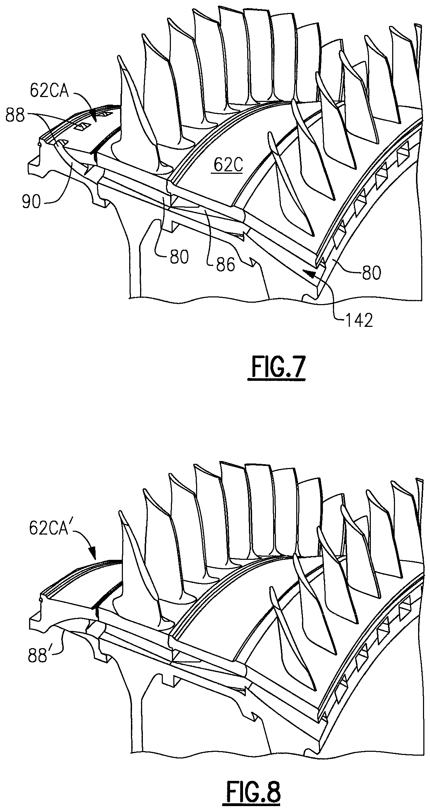

With reference to Figure 7, the passages which flank the spokes 80, 86 may also be utilized to define airflow paths to receive an airflow from an inlet HPC spacer 62CA. The inlet HPC spacer 62CA includes a plurality of inlets 88 which may include a ramped flow duct 90 to communicate an airflow into the passages defined between the spokes 80, 86. The airflow may be core gas path flow which is communicated from an upstream, higher pressure stage for use in a later section within the engine such as the turbine section 28.

It should be appreciated that various flow paths may be defined through combinations of the inlet HPC spacers 62CA to include but not limited to, core gas path flow communication, secondary cooling flow, or combinations thereof. The airflow may be communicated not only forward to aft toward the turbine section, but also aft to forward within the engine 20. Further, the airflow may be drawn from adjacent static structure such as vanes to effect boundary flow turbulence as well as other flow conditions. That is, the HPC spacers 62C and the inlet HPC spacer 62CA facilitate through-flow for use in rim cooling, purge air for use downstream in the compressor, turbine, or bearing compartment operation.

In another disclosed non-limiting embodiment, the inlets 88' may be located through the inner diameter of an inlet HPC spacer 62CA' (Figure 8). The inlet HPC spacer 62CA' may be utilized to, for example, communicate a secondary cooling flow along the spokes 80, 86 to cool the spokes 80, 86 as well as communicate secondary cooling flow to other sections of the engine 20.

In another disclosed non-limiting embodiment, the inlets 88, 88' may be arranged with respect to rotation to essentially "scoop" and further pressurize the flow. That is, the inlets 88, 88' include a circumferential directional component.

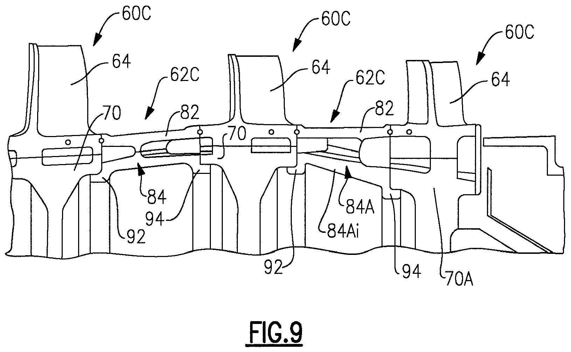

With reference to Figure 9, each rotor ring 84 defines a forward circumferential flange 92 and an aft circumferential flange 94 which is captured radially inboard of the associated adjacent rotor rim 70. That is, each rotor ring 84 is captured therebetween in the stacked configuration. In the disclosed tie-shaft configuration with multi-metal rotors, the stacked configuration is arranged to accommodate the relatively lower-load capability alloys on the core gas path side of the rotor hardware, yet maintain the load-carrying capability between the seal rings 84 and the rims 70 to transmit rotor torque.

That is, the alternating rotor rim 70 to seal ring 84 configuration carries the rotor stack preload - which may be upward of 150,000 lbs (667 kN) - through the high load capability material of the rotor rim 70 to seal ring 84 interface, yet permits the usage of a high temperature resistant, yet lower load capability materials in the blades 64 and the seal surface 82 which are within the high temperature core gas path. Divorce of the sealing area from the axial rotor stack load path facilitates the use of a disk-specific alloy to carry the stack load and allows for the high-temp material to only seal the rotor from the flow path. That is, the inner diameter loading and outer diameter sealing permits a segmented airfoil and seal platform design which facilitates relatively inexpensive manufacture and highly contoured airfoils. The disclosed rotor arrangement facilitates a compressor inner diameter bore architectures in which the reduced blade/platform pull may be taken advantage of in ways that produce a larger bore inner diameter to thereby increase shaft clearance.

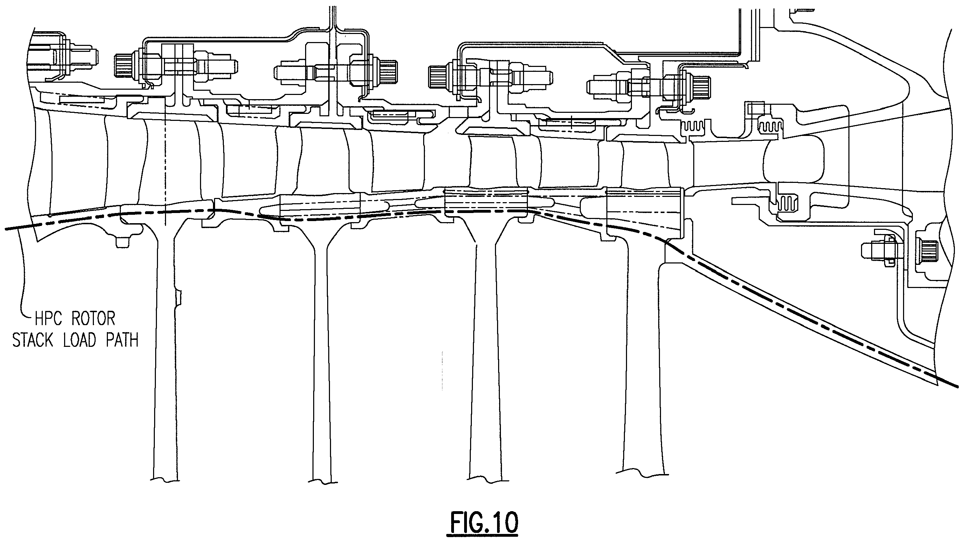

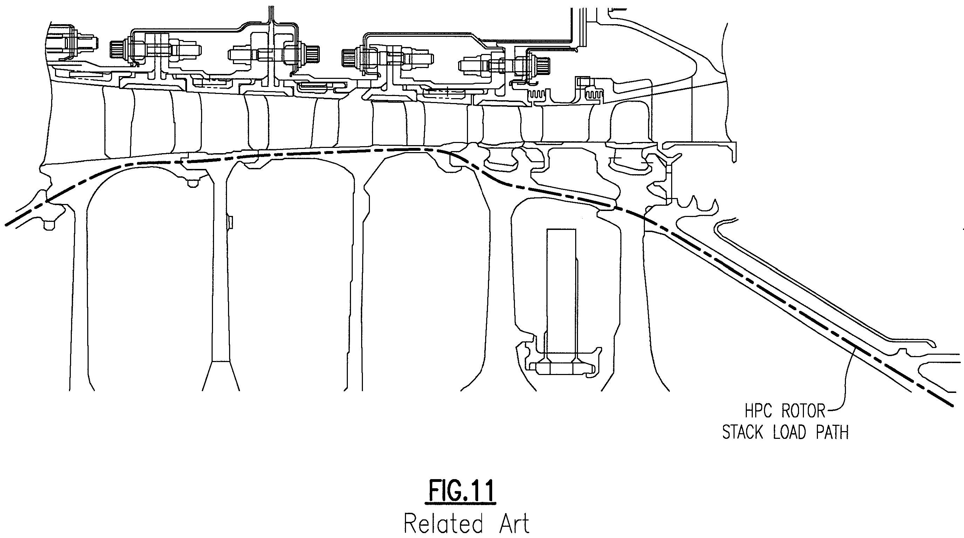

The HPC spacers 62C and HPC rotors 60C of the IBR may also be axially asymmetric to facilitate a relatively smooth axial rotor stack load path (Figure 10). The asymmetry may be located within particular rotor rims 70A and/or seal rings 84A (Figure 9). For example, the seal ring 84A includes a thinner forward circumferential flange 92 compared to a thicker aft circumferential flange 94 with a ramped interface 84Ai. The ramped interface 84Ai provides a smooth rotor stack load path. Without tangentially slot assembled airfoils in an IBR, the load path along the spool may be designed in a more efficient manner as compared to the heretofore rather torturous conventional rotor stack load path (Figure 11; RELATED ART).

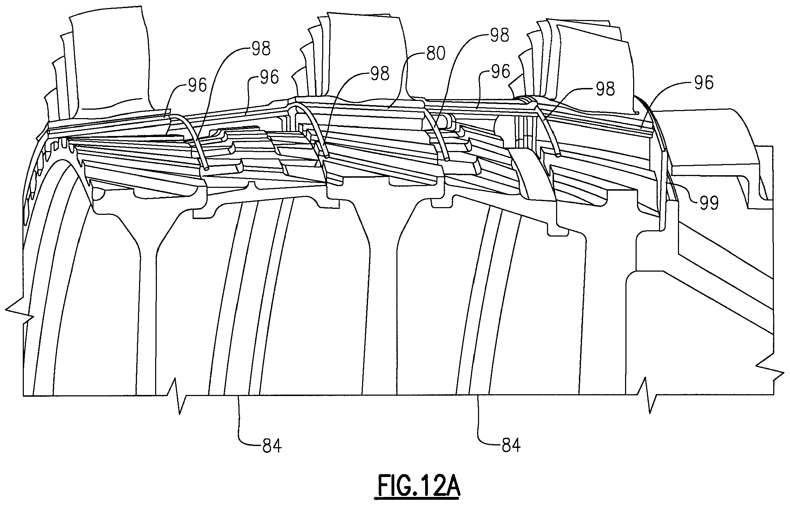

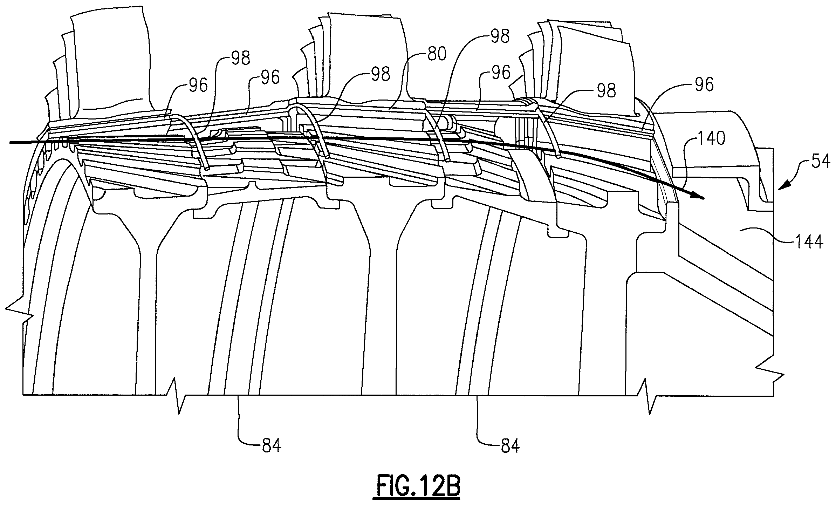

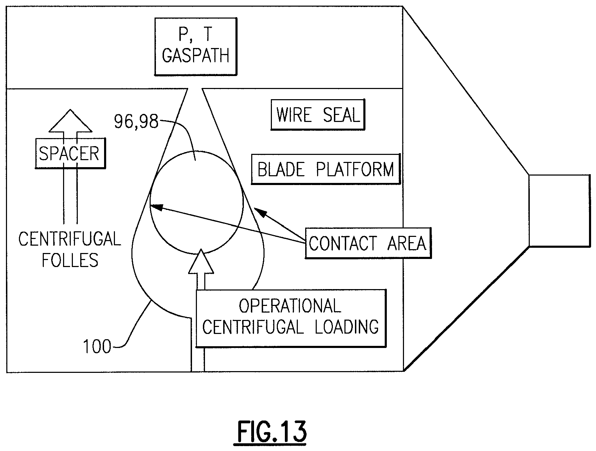

With reference to Figure 12A, the blades 64 and seal surface 82 may be formed as segments that include axial wire seals 96 between each pair of the multiple of seal surfaces 82 and each pair of the multiple of blades 64 as well as tangential wire seals 98 between the adjacent HPC spacers 62C and HPC rotors 60C. The axial seals 96 extend between each blade and the tangential seals 98 extend about the rotor on each side of the spacer 62C. In one example, the axial seals 96 are configured to extend along a length of each edge of each blade platform 76 and the tangential seals 98 are configured to extend circumferentially about the axis A between fore and aft edges of each spacer 60c and the corresponding circumferential fore and aft edges of the platforms 76 for each set of blades 64. The tangential wire seals 96 and the axial wire seals 98 are located within teardrop shaped cavities 100 (Figure 13) such that centrifugal forces increase the seal interface forces. Figure 12B shows an improved secondary flow configuration that takes advantage of the spoked rotor design to provide additional cooling to the high pressure turbine (HPT) 54 as indicated by arrow 140. This configuration entrains air from the engine gaspath at a mid-compressor location and flows through spokes in the disk 66 and spacer 62C portions of the HPC rotors 60C. Flow exits at the aft rotor location and combines with additional air flow to be delivered to a second blade of the HPT 54. As such, in this arrangement, existing hardware is utilized for secondary flow geometry to allow elimination of pumps at the aft end of the HPC 52. This cooling system can be utilized in any configuration where sufficient flow passes through slotted rotor geometry at sufficient driving pressures.

As shown in Figure 7, the inlets 88 communicate air into passages 142 defined between the spokes 80, 86, which then empty into cavities 144 (Figure 12B) of the HPT 54. The inlets 88 essentially cooperate with each other to comprise a pump that directs cooling air into the HPT 54. The cavity 144 is at a lower pressure than the pressure that exists at the inlets 88, and thus serves to act as a sink, i.e. suction source. In the example shown, the inlets 88 pump high pressure air from the 5-6 compressor stage into the HPT station 4.5 location.

Figure 12A shows a potential "seal" option if the secondary cooling scheme of Figure 12B is not vented to station 4.5. In this configuration, a wall structure 99 is positioned aft of the last set of blades 64. This could be used in an application with moderately elevated T3 temperatures, where the rotor construction does not include the bond to join two different materials. In this case the thermal gradient is retarded by the length of the spoke; therefore an abrupt throttle change (more power) would not create an instantaneous TMF rotor (full hoop) stress increase.

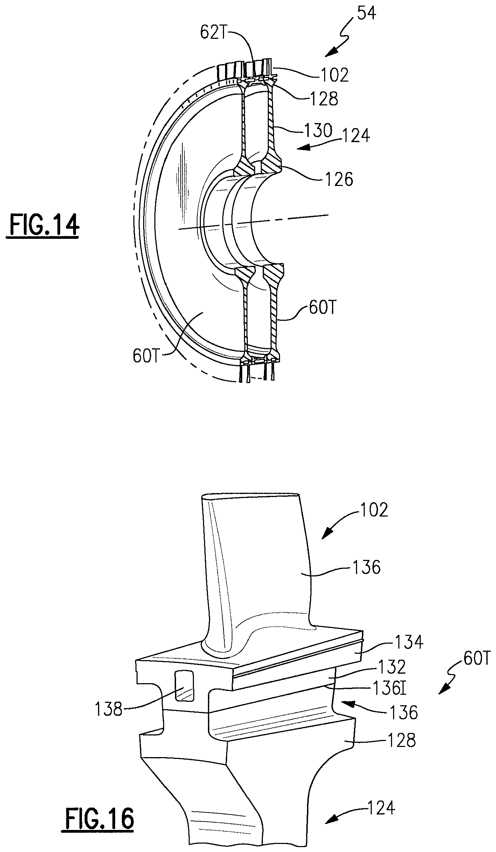

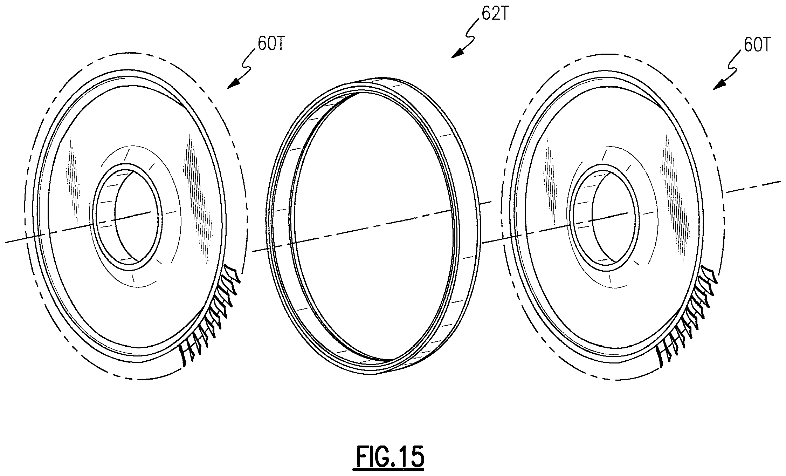

Although the high pressure compressor (HPC) 52 is discussed in detail above, it should be appreciated that the high pressure turbine (HPT) 54 (Figure 14) is similarly assembled from a plurality of successive respective HPT rotor disks 60T which alternate with HPT spacers 62T (Figure 15) arranged in a stacked configuration and the disclosure with respect to the high pressure compressor (HPC) 52 is similarly applicable to the high pressure turbine (HPT) 54 as well as other spools of the gas turbine engine 20 such as a low spool and an intermediate spool of a three-spool engine architecture. That is, it should be appreciated that other sections of a gas turbine engine may alternatively or additionally benefit herefrom.

With reference to Figure 14, each HPT rotor 60T generally includes a plurality of blades 102 circumferentially disposed around a rotor disk 124. The rotor disk 124 generally includes a hub 126, a rim 128, and a web 130 which extends therebetween. Each blade 102 generally includes an attachment section 132, a platform section 134, and an airfoil section 136 (Figure 16).

The blades 102 may be bonded to the rim 128 along a spoke 136 at an interface 1361 as with the high pressure compressor (HPC) 52. Each spoke 136 also includes a cooling passage 138 generally aligned with each turbine blade 102. The cooling passage 138 communicates a cooling airflow into internal passages (not shown) of each turbine blade 102.

It should be understood that like reference numerals identify corresponding or similar elements throughout the several drawings. It should also be understood that although a particular component arrangement is disclosed in the illustrated embodiment, other arrangements will benefit herefrom.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A rotor (60) for a gas turbine engine comprising:
a first rotor disk (66) defined along an axis of rotation and a second rotor disk (66) spaced axially aft of the first rotor disk (66);
a first plurality of blades (64) which extend from the first rotor disk (66) and a second plurality of blades (64) which extend from the second rotor disk (66);
at least a first spacer (62CA; 62CA') positioned upstream of the first plurality of blades (64) and a second spacer (62C) positioned between the first and second pluralities of blades (64), wherein the spacers (62C, 62CA, 62CA') each include a spacer outer peripheral surface;
wherein each rotor disk (66) includes a rotor outer peripheral surface, and wherein the first and second pluralities of blades (64) are each supported on respective platforms (76) that have a platform inner surface that faces the rotor outer peripheral surface, **characterised in that**:
the second spacer (62C) includes a plurality of core gas path seals (82) that are each separated from a rotor ring (84) at an interface (861) defined along a spoke (86), and wherein the second spacer includes a spacer inner surface that faces the axis of rotation, and wherein
a flow passage is defined between the rotor outer peripheral surface and the platform inner surface, and between the spacer inner surface and a rotor ring outer surface such that the flow passage extends from the first rotor disk (66) through the second spacer (62C) and into the second rotor disk (66); and
a plurality of inlets (88; 88') formed within at least one of the spacer outer peripheral surface and a spacer inner surface of the first spacer (62CA; 62CA') to pump air into the flow passage.

2. The rotor as recited in claim 1, wherein the flow passage includes an outlet configured to direct cooling airflow in to a turbine section.

3. The rotor as recited in claim 2, wherein the turbine section is a high pressure turbine.

4. The rotor as recited in preceding claim, wherein each plurality of blades (64) comprise compressor blades, for example high pressure compressor blades.

5. The rotor as recited in any preceding claim, wherein each plurality of blades (64) are integrally formed as one piece with a respective rotor disk (66).

6. The rotor as recited in any preceding claim, wherein each plurality of blades (64) are formed from a first material and each rotor disk (66) is formed from a second material that is different from the first material, and wherein each plurality of blades (64) are bonded to a or the respective rotor disk (66) at a second interface (801).

7. The rotor as recited in any preceding claim, wherein each spacer (62C; 62CA; 62CA') is integrally formed as one piece with a or the respective rotor disk (66).

8. The rotor as recited in any of claims 1 to 6, wherein each spacer (62C; 62CA; 62CA') is formed from a first material and each rotor disk (66) is formed from a second material that is different from the first material, and wherein each spacer (62C; 62CA; 62CA') is bonded to a or the respective rotor disk (66) at an interface.

9. The rotor as recited in any preceding claim, wherein the flow passage is sealed by first seals (82) extending between adjacent pairs of the blades (64) and second seals (98) extending circumferentially about the axis of rotation between each spacer (62C; 62CA; 62CA') and a or the respective plurality of blades (64).

10. The rotor as recited in any preceding claim, wherein the plurality of inlets (88; 88') comprise discrete openings that are circumferentially spaced apart from each other about the axis.

11. A gas turbine engine comprising:
a compressor section including a rotor as recited in any preceding claim; and
a turbine section configured to receive air pumped out of the flow passage.

12. The gas turbine engine as recited in claim 11, wherein the compressor section comprises a high pressure compressor and the turbine section comprises a high pressure turbine.

13. The gas turbine engine as recited in claim 11 or 12, comprising:
a third plurality of blades positioned axially aft of the second plurality of blades; and
a third spacer positioned between the second and third plurality of blades, and wherein the flow passage extends in a generally axial direction from a location starting at the inlets at the first spacer and terminating at an outlet into the turbine section positioned aft of the third plurality of blades.

14. The gas turbine engine recited in claim 13, including a turbine casing section positioned aft of the third plurality of blades to define a turbine cavity that receives air exiting the flow passage.

15. The gas turbine engine as recited in any of claims 11 to 14, including a plurality of first seals (82) and second seals (98) that cooperate to seal the flow passage, wherein, optionally, the first seals (96) extend along a length of platform edges for adjacent blades (64), and/or wherein, optionally, the second seals (98) extend circumferentially about the axis between fore and aft edges of the spacers (62C; 62CA; 62CA') and an associated fore and aft edge of platforms (76) for the first and second plurality of blades (64).

## Patentansprüche

1. Rotor (60) für ein Gasturbinentriebwerk, der Folgendes umfasst:
eine erste Rotorscheibe (66), die entlang einer Drehachse definiert ist, und eine zweite Rotorscheibe (66), die axial hinter der ersten Rotorscheibe (66) beabstandet ist,
eine erste Vielzahl von Schaufeln (64), die sich von der ersten Rotorscheibe (66) erstrecken, und eine zweite Vielzahl von Schaufeln (64), die sich von der zweiten Rotorscheibe (66) erstrecken;
mindestens einen ersten Abstandhalter (62CA; 62CA'), der stromaufwärts der ersten Vielzahl von Schaufeln (64) positioniert ist, und einen zweiten Abstandhalter (62C), der zwischen der ersten und der zweiten Vielzahl von Schaufeln (64) positioniert ist, wobei die Abstandhalter (62C, 62CA, 62CA') je eine Abstandhalteraußenumfangsfläche umfassen;
wobei jede Rotorscheibe (66) eine Rotoraußenumfangsfläche einschließt, und wobei die erste und die zweite Vielzahl von Schaufeln (64) je auf jeweiligen Plattformen (76) gestützt sind, die eine Plattforminnenfläche aufweisen, die der Rotoraußenumfangsfläche zugewandt ist, **dadurch gekennzeichnet, dass**:
der zweite Abstandhalter (62C) eine Vielzahl von Kerngaspfaddichtungen (82) einschließt, die je an einer Schnittstelle (86I) von einem Rotorring (84) getrennt sind, die entlang einer Speiche (86) definiert ist, und wobei der zweite Abstandhalter eine Innenfläche einschließt, die der Drehachse zugewandt ist, und wobei
ein Flussdurchgang zwischen der Rotoraußenumfangsfläche und der Plattforminnenfläche und zwischen der Abstandhalterinnenfläche und einer Rotorringaußenfläche definiert ist, sodass der Flussdurchgang sich von der ersten Rotorscheibe (66) durch den zweiten Abstandhalter (62C) und in die zweite Rotorscheibe (66) erstreckt; und
eine Vielzahl von Einlässen (88; 88'), die innerhalb von mindestens einem von der Abstandhalteraußenumfangsfläche und einer Abstandhalterinnenfläche des ersten Abstandhalters (62CA; 62CA') dazu ausgebildet ist, Luft in den Flussdurchgang zu pumpen.

2. Rotor nach Anspruch 1, wobei der Flussdurchgang einen Auslass einschließt, der dazu konfiguriert ist, einen Kühlluftfluss in einen Turbinenbereich zu leiten.

3. Rotor nach Anspruch 2, wobei der Turbinenbereich eine Hochdruckturbine ist.

4. Rotor nach einem der vorhergehenden Ansprüche, wobei jede Vielzahl von Schaufeln (64) Verdichterschaufeln, zum Beispiel Hochdruckverdichterschaufeln umfasst.

5. Rotor nach einem der vorhergehenden Ansprüche, wobei jede Vielzahl von Schaufeln (64) einstückig als ein Teil mit einer jeweiligen Rotorscheibe (66) ausgebildet ist.

6. Rotor nach einem der vorhergehenden Ansprüche, wobei jede Vielzahl von Schaufeln (64) aus einem ersten Material gebildet ist und jede Rotorscheibe (66) aus einem zweiten Material gebildet ist, das sich von dem ersten Material unterscheidet, und wobei jede Vielzahl von Schaufeln (64) an einer zweiten Schnittstelle (80I) an eine oder die jeweilige Rotorscheibe (66) gebunden ist.

7. Rotor nach einem der vorhergehenden Ansprüche, wobei jeder Abstandhalter (62C; 62CA; 62CA') einstückig als ein Teil mit einer oder der jeweiligen Rotorscheibe (66) ausgebildet ist.

8. Rotor nach einem der Ansprüche 1 bis 6, wobei jeder Abstandhalter (62C; 62CA; 62CA') aus einem ersten Material gebildet ist und jede Rotorscheibe (66) aus einem zweiten Material gebildet ist, das sich von dem ersten Material unterschiedet, und wobei jeder Abstandhalter (62C; 62CA; 62CA') an einer Schnittstelle an eine oder die jeweilige Rotorscheibe (66) gebunden ist.

9. Rotor nach einem der vorhergehenden Ansprüche, wobei der Flussdurchgang durch erste Dichtungen (82), die sich zwischen benachbarten Paaren von Schaufeln (64) erstrecken, und zweite Dichtungen (98), die sich in Umfangsrichtung zwischen jedem Abstandhalter (62C; 62CA; 62CA') und einer oder der jeweiligen Vielzahl von Schaufeln (64) um die Drehachse erstrecken, abgedichtet ist.

10. Rotor nach einem der vorhergehenden Ansprüche, wobei die Vielzahl von Einlässen (88; 88') gesonderte Öffnungen umfassen, die in Umfangsrichtung um die Achse voneinander beabstandet sind.

11. Gasturbinentriebwerk, das Folgendes umfasst:
einen Verdichterbereich, der einen Rotor nach einem der vorhergehenden Ansprüche einschließt; und
einen Turbinenbereich, der dazu konfiguriert ist, Luft zu empfangen, die aus dem Flussdurchgang gepumpt wird.

12. Gasturbinentriebwerk nach Anspruch 11, wobei der Verdichterbereich einen Hochdruckverdichter umfasst und der Turbinenbereich eine Hochdruckturbine umfasst.

13. Gasturbinentriebwerk nach Anspruch 11 oder 12, das Folgendes umfasst:
eine dritte Vielzahl von Schaufeln, die axial hinter der zweiten Vielzahl von Schaufeln positioniert ist; und
einen dritten Abstandhalter, der zwischen der zweiten und der dritten Vielzahl von Schaufeln positioniert ist, und wobei der Flussdurchgang sich in eine im Allgemeinen axiale Richtung von einem Standort erstreckt, wobei er an den Einlässen an dem ersten Abstandhalter beginnt und an einem Auslass in den Turbinenbereich, der hinter der dritten Vielzahl von Schaufeln positioniert ist, endet.

14. Gasturbinentriebwerk nach Anspruch 13, einschließend einen Turbinengehäusebereich, der hinter der dritten Vielzahl von Schaufeln dazu positioniert ist, einen Turbinenhohlraum zu definierten, der Luft empfängt, die aus dem Flussdurchgang austritt.

15. Gasturbinentriebwerk nach einem der Ansprüche 11 bis 14, einschließend eine Vielzahl von ersten Dichtungen (82) und zweiten Dichtungen (98), die zusammenwirken, um den Flussdurchgang abzudichten, wobei die ersten Dichtungen (96) sich gegebenenfalls entlang einer Länge von Plattformkanten für benachbarte Schaufeln (64) erstrecken, und/oder wobei die zweiten Dichtungen (98) sich gegebenenfalls in Umfangsrichtung um die Achse zwischen den vorderen und den hinteren Kanten der Abstandhalter (62C; 62CA; 62CA') und einer damit assoziierten vorderen und hinteren Kante von Plattformen (76) für die erste und die zweite Vielzahl von Schaufeln (64) erstrecken.

## Revendications

1. Rotor (60) d'un moteur à turbine à gaz comprenant :
un premier disque de rotor (66) défini le long d'un axe de rotation et un second disque de rotor (66) espacé axialement à l'arrière du premier disque de rotor (66) ;
une première pluralité d'aubes (64) qui s'étendent depuis le premier disque de rotor (66) et une deuxième pluralité d'aubes (64) qui s'étendent depuis le second disque de rotor (66) ;
au moins une première entretoise (62CA ; 62CA') positionnée en amont de la première pluralité d'aubes (64) et une deuxième entretoise (62C) positionnée entre les première et deuxième pluralités d'aubes (64), dans lequel les entretoises (62C, 62CA, 62CA') comprennent chacun une surface périphérique externe d'entretoise ;
dans lequel chaque disque de rotor (66) comprend une surface périphérique externe de rotor, et dans lequel les première et deuxième pluralités d'aubes (64) sont chacune supportées sur des plateformes respectives (76) qui ont une surface interne de plateforme qui fait face à la surface périphérique externe de rotor, **caractérisé en ce que** :
la deuxième entretoise (62C) comprend une pluralité de joints d'étanchéité de trajet de gaz central (82) qui sont chacun séparés d'un anneau de rotor (84) au niveau d'une interface (86I) définie le long d'un rayon (86), et dans lequel la deuxième entretoise comprend une surface interne d'entretoise qui fait face à l'axe de rotation, et dans lequel un passage d'écoulement est défini entre la surface périphérique externe de rotor et la surface interne de plateforme, ainsi qu'entre la surface interne d'entretoise et
une surface externe d'anneau de rotor, de sorte que le passage d'écoulement s'étend depuis le premier disque de rotor (66) à travers la deuxième entretoise (62C) et dans le second disque de rotor (66) ; et
une pluralité d'entrées (88 ; 88') formées dans au moins l'une de la surface périphérique externe d'entretoise et d'une surface interne d'entretoise de la première entretoise (62CA ; 62CA') pour pomper l'air dans le passage d'écoulement.

2. Rotor selon la revendication 1, dans lequel le passage d'écoulement comprend une sortie conçue pour diriger le flux d'air de refroidissement dans une section de turbine.

3. Rotor selon la revendication 2, dans lequel la section de turbine est une turbine haute pression.

4. Rotor selon la revendication précédente, dans lequel chaque pluralité d'aubes (64) comprend des aubes de compresseur, par exemple des aubes de compresseur haute pression.

5. Rotor selon une quelconque revendication précédente, dans lequel chaque pluralité d'aubes (64) est formée d'un seul tenant avec un disque de rotor respectif (66).

6. Rotor selon une quelconque revendication précédente, dans lequel chaque pluralité d'aubes (64) est formée à partir d'un premier matériau et chaque disque de rotor (66) est formé à partir d'un second matériau qui est différent du premier matériau, et dans lequel chaque pluralité d'aubes (64) est liée à un ou au disque de rotor respectif (66) au niveau d'une seconde interface (80I).

7. Rotor selon une quelconque revendication précédente, dans lequel chaque entretoise (62C ; 62CA ; 62CA') est formée d'un seul tenant avec un ou le disque de rotor respectif (66).

8. Rotor selon l'une quelconque des revendications 1 à 6, dans lequel chaque entretoise (62C ; 62CA ; 62CA') est formée à partir d'un premier matériau et chaque disque de rotor (66) est formé à partir d'un second matériau qui est différent du premier matériau, et dans lequel chaque entretoise (62C ; 62CA ; 62CA') est liée à un ou au disque de rotor respectif (66) au niveau d'une interface.

9. Rotor selon une quelconque revendication précédente, dans lequel le passage d'écoulement est étanchéifié par des premiers joints d'étanchéité (82) s'étendant entre des paires adjacentes des aubes (64) et des seconds joints d'étanchéité (98) s'étendant de manière circonférentielle autour de l'axe de rotation entre chaque entretoise (62C ; 62CA ; 62CA') et une ou la pluralité respective d'aubes (64).

10. Rotor selon une quelconque revendication précédente, dans lequel la pluralité d'entrées (88 ; 88') comprend des ouvertures distinctes qui sont espacées de manière circonférentielle les unes des autres autour de l'axe.

11. Moteur à turbine à gaz comprenant :
une section de compresseur comprenant un rotor selon une quelconque revendication précédente ;
et
une section de turbine conçue pour recevoir l'air pompé hors du passage d'écoulement.

12. Moteur à turbine à gaz selon la revendication 11, dans lequel la section de compresseur comprend un compresseur haute pression et la section de turbine comprend une turbine haute pression.

13. Moteur à turbine à gaz selon la revendication 11 ou 12, comprenant :
une troisième pluralité d'aubes positionnées axialement à l'arrière de la deuxième pluralité d'aubes ; et
une troisième entretoise positionnée entre les deuxième et troisième pluralités d'aubes, et dans lequel le passage d'écoulement s'étend dans une direction généralement axiale depuis un emplacement commençant aux entrées au niveau de la première entretoise et se terminant en une sortie dans la section de turbine positionnée à l'arrière de la troisième pluralité d'aubes.

14. Moteur à turbine à gaz selon la revendication 13, comprenant une section de carter de turbine positionnée à l'arrière de la troisième pluralité d'aubes pour définir une cavité de turbine qui reçoit l'air sortant du passage d'écoulement.

15. Moteur à turbine à gaz selon l'une quelconque des revendications 11 à 14, comprenant une pluralité de premiers joints d'étanchéité (82) et de seconds joints d'étanchéité (98) qui coopèrent pour étanchéifier le passage d'écoulement, dans lequel, éventuellement, les premiers joints d'étanchéité (96) s'étendent sur une longueur de bords de plateforme pour des aubes adjacentes (64), et/ou dans lequel, éventuellement, les seconds joints d'étanchéité (98) s'étendent de manière circonférentielle autour de l'axe entre des bords avant et arrière des entretoises (62C ; 62CA ; 62CA') et un bord avant et arrière associé de plateformes (76) pour les première et deuxième pluralités d'aubes (64).
